# EUROPÄISCHE PATENTSCHRIFT

(11) **EP 1 214 128 B1**
(45) Veröffentlichungstag und Bekanntmachung des Hinweises auf die Patenterteilung: **03.09.2003**
(21) Anmeldenummer: 00967570.3
(22) Anmeldetag: 13.09.2000
(51) Int. Cl.: A63F 3/06

(54) **TERMINAL FÜR DIE BEARBEITUNG VON FORMULAREN**
TERMINAL FOR TREATING FORMS
TERMINAL POUR LE TRAITEMENT DE FORMULAIRES

(30) Priorität: 24.09.1999 DE 19945834
(43) Veröffentlichungstag der Anmeldung: 19.06.2002
(73) Patentinhaber: Wincor Nixdorf International GmbH, 33106 Paderborn (DE)
(72) Erfinder: BAITZ, Günter, 13629 Berlin (DE); KAMIN, Hartmut, 10585 Berlin (DE); BURCHART, Joachim, 33189 Schlangen (DE)
(86) Internationale Anmeldenummer: DE0003179
(87) Internationale Veröffentlichungsnummer: WO01024119

(56) Entgegenhaltungen:
- WO-A-98/41073
- DE-A- 3 741 704
- FR-A- 2 714 752
- US-A- 5 156 397
- US-A- 5 939 694

## Beschreibung

### Technisches Gebiet

Die Erfindung betrifft ein Terminal für die Bearbeitung von Formularen, insbesondere Wettscheinen.

### Stand der Technik

Unter der Bezeichnung 'XION' wird von der Anmelderin ein Terminal der genannten Art angeboten und vertrieben, das in Seitenansicht etwa die Form einer nach hinten geneigten Halbellipse hat. Auf dem Scheitel der Halbellipse ist eine schlitzförmige Zuführöffnung für Belege angeordnet. Auf der Bedienerseite befindet sich unterhalb der Zuführöffnung ein pultartig nach hinten geneigtes Sichtgerät mit einer berührungsempfindlichen Eingabefläche und darunter ein Aufnahmefach für Belege, welche einen hinter dem Sichtgerät in dem Terminal eingebauten Belegleser durchlaufen haben. Unter dem Aufnahmefach ist die Bedienseite eines PCbasierten Steuergerätes stets zugänglich.

Das vorgenannte Terminal hat verschiedene Nachteile:

Zum Einführen eines Belegs in die Zuführöffnung muß über das Sichtgerät hinweggegriffen werden. Dadurch wird die Bedienung des Terminals insbesondere für kleine Personen erschwert.

Bei einem Belegstau muß das Sichtgerät demontiert werden.

Die Bedienseite des Steuergerätes und damit dessen Bedienelemente sind nicht vor unbefugtem Zugriff geschützt.

Aus der WO 9841073 A1 ist ein Gerät mit einem ersten und einem daran ankoppelbaren weiteren Baugruppenträger bekannt. Der weitere Baugruppenträger ist als Peripheriegerätezusatz ausgebildet und auf dem Baugruppenträger lösbar und schwenkbar befestigt.

Ein Terminal ist zum Beispiel aus der US-A-5 939 694 bekannt.

Aufgabe der Erfindung ist es, ein Terminal der genannten Art vorzuschlagen, das einfach zu bedienen, zu installieren und zu warten ist und dessen nur durch eine Bedienkraft zu bedienende Bedienelemente vor unbefugtem Zugriff geschützt sind.

Die Aufgabe wird durch die Merkmale des Anspruchs 1 gelöst.

### Darstellung der Erfindung

Die Erfindung geht von der Erkenntnis aus, daß ein Terminal für die Bearbeitung von Formularen dann besonders einfach zu bedienen ist, wenn zumindest die regelmäßig zu bedienenden Komponenten nahe beieinander auf einem Kreisbogen um das Schultergelenk einer Bedienperson liegen. Bei einem Terminal der genannten Art sind dies die Beleg-Zuführöffnung und die berührungsempfindliche Eingabefläche des Sichtgerätes, im weiteren Sinne aber auch die Bedienelemente der Elektronikbox. Gemäß der Erfindung ist dazu ein Ständer mit einem Fußteil und einem etwa senkrecht von diesem aufragenden Tragteil für die Halterung des Sichtgerätes vorgesehen und der Belegleser ist auf einer Bedienerseite des Terminals unterhalb des Sichtgerätes angeordnet. Für eine einfache hard- und softwaremäßige Installation und Wartung des Terminals ist der Belegleser in Richtung einer Bedienperson zwischen einer an dem Tragteil anliegenden und einer von diesem beabstandeten Position verschieblich.

Vorzugsweise ist der Belegleser an wenigstens einer Auszugschiene befestigt, welche an dem Ständer gleitgelagert ist.

Alternativ dazu kann der Belegleser an einer Belegleser-Wand befestigt sein, welche die Bedienerseite des Tragteils bei an diesem anliegendem Belegleser im wesentlichen abdeckt und an wenigstens einer Auszugschiene befestigt ist, welche ihrerseits an dem Ständer gleitgelagert ist.

Entsprechend einer bevorzugten Ausprägung der Erfindung ist auf dem Fußteil eine wenigstens teilweise hohle Platte angeordnet, und die wenigstens eine Auszugschiene wird bei einer Verschiebung des Beleglesers in Richtung des Tragteils von der Platte aufgenommen.

Die Elektronikbox ist vorzugsweise auf der Platte oder einem -von der Bedienerseite aus gesehen- hinter dem Tragteil liegenden Flächenabschnitt des Fußteils aufgestellt oder befestigt. Dabei ist die Elektronikbox so auf dem Fußteil angeordnet, daß ihre Bedienseite an dem Tragteil anliegt, wobei das Tragteil mit wenigstens einem die Bedienelemente der Elektronikbox freilassenden Ausschnitt versehen ist. Die Bedienseite wird dann bei an dem Tragteil anliegendem Belegleser von diesem oder der Belegleser-Wand abgedeckt und damit unbefugtem Zugriff entzogen. In der von dem Tragteil beabstandeten Position wird die Bedienseite der Elektronikbox für einen Zugriff auf die Bedienelemente freigegeben.

Um den Zugriffsschutz noch weiter zu verbessern ist in einer bevorzugten Weiterbildung der Erfindung der Tragteil rahmenartig ausgebildet, wobei der Rahmen zumindest einen ihrer Bedienseite nahen Bereich der Elektronikbox umgreift.

Eine die Elektronikbox mit dem Belegleser und/oder eine mit dem Sichtgerät verbindende elektrische Leitung mag unter Bildung einer Auszugschlaufe durch den Tragteil oder auch zusätzlich durch die Platte geführt sein.

Hinter dem Sichtgerät mag ein Belegdrucker auf der Elektronikbox augestellt sein. Um von diesem gedruckte Kassenbons von der Bedienerseite des Terminals aus ergreifen zu können, ist gemäß einer Fortbildung der Erfindung das Sichtgerät auf dem Tragteil seitenverschieblich oder seitenverschwenkbar.

Nachfolgend werden zwei Ausführungsbeispiele der Erfindung an Hand der beigefügten Zeichnungen erläutert.

### Kurzbeschreibung der Zeichnungen

Es zeigt
- Fig. 1: ein erstes Ausführungsbeispiel eines Terminal für die Bearbeitung von Formularen in perspektivischer Seitenansicht,
- Fig. 2: das Terminal aus Fig. 1 mit zu einem Tragteil beabstandetem Belegleser,
- Fig. 3: das Terminal aus Fig. 1 in perspektivischer Rückansicht,
- Fig. 4: ein zweites Ausführungsbeispiel eines Terminal für die Bearbeitung von Formularen in perspektivischer Seitenansicht,
- Fig. 5: das Terminal aus Fig. 4 in perspektivischer Vorderansicht,
- Fig. 6: das Terminal aus Fig. 4 in perspektivischer Rückansicht.

### Beschreibung einer Ausführungsform der Erfindung

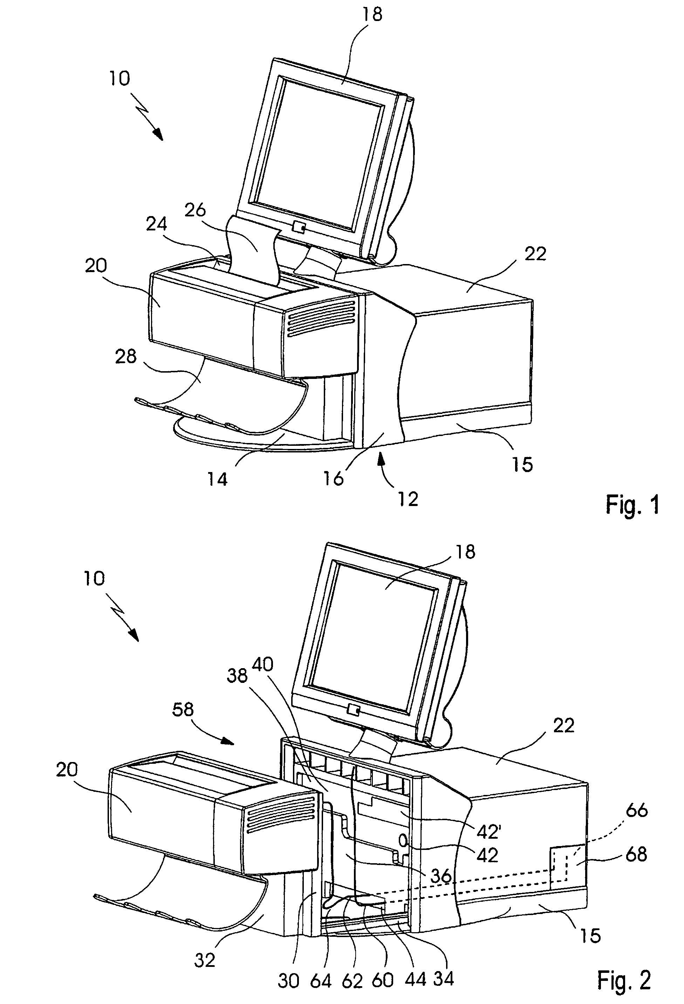

In Fig. 1 ist ein erstes Ausführungsbeispiel eines Terminal 10 für die Bearbeitung von Formularen oder Belegen 26 in perspektivischer Seitenansicht dargestellt. Es umfaßt einen Ständer 12 mit einem Fußteil 14, 14' und einem Tragteil 16, ein Sichtgerät 18 mit einer berührungsempfindlichen Eingabefläche, einem sogenannten Touch Screen, einen Belegleser 20 und eine Elektronikbox 22, in der eine Terminal-Steuereinrichtung untergebracht ist. Der Belegleser 20 hat oben eine Zuführöffnung 24 für zu bearbeitende Belege 26 und unten ein Aufnahmefach 28 für Belege, die den Belegleser 20 durchlaufen haben.

Der Belegleser 20 ist am oberen Rand einer Belegleser-Wand 30 auf deren Bedienerseite 32 angebracht. Von der rechten und linken unteren Ecke der Hinterseite der Belegleser-Wand 30 steht jeweils eine Gleitschiene 34 senkrecht ab (nur die rechte Gleitschiene ist in Fig. 2 sichtbar). Die Gleitschienen 34 sind in bekannter und deshalb nicht dargestellter Weise in einer hinter dem Tragteil 16 auf dem hinteren Fußteil 14' angeordneten hohlen Platte 15 derart gleitgelagert, daß die Belegleser-Wand 30 in Richtung einer Bedienperson zwischen einer an dem Tragteil 16 anliegenden Position (Fig. 1) und einer von diesem beabstandeten Position (Fig. 2) verschieblich ist. Die Belegleser-Wand 30 deckt die Bedienerseite 36 des Tragteils 16 in ihrer an dieser anliegender Position im wesentlichen ab.

Die Elektronikbox 22 ist so auf der Platte 15 angeordnet, daß ihre Bedienseite 38 dem Tragteil 16 zugewandt ist. Der Tragteil 16 ist im Bereich der Bedienseite 38 der Elektronikbox 22 mit einem Ausschnitt 40 versehen, der an der Bedienseite 38 angeordnete Bedienelemente - beispielsweise eine Einschalttaste 42 und ein Datenträger-Lesegerät 42'- der Elektronikbox 22 für einen Zugriff freiläßt. Ein Kabeldurchlaß 44 in dem Tragteil 16 mündet im Hohlraum der Platte 15.

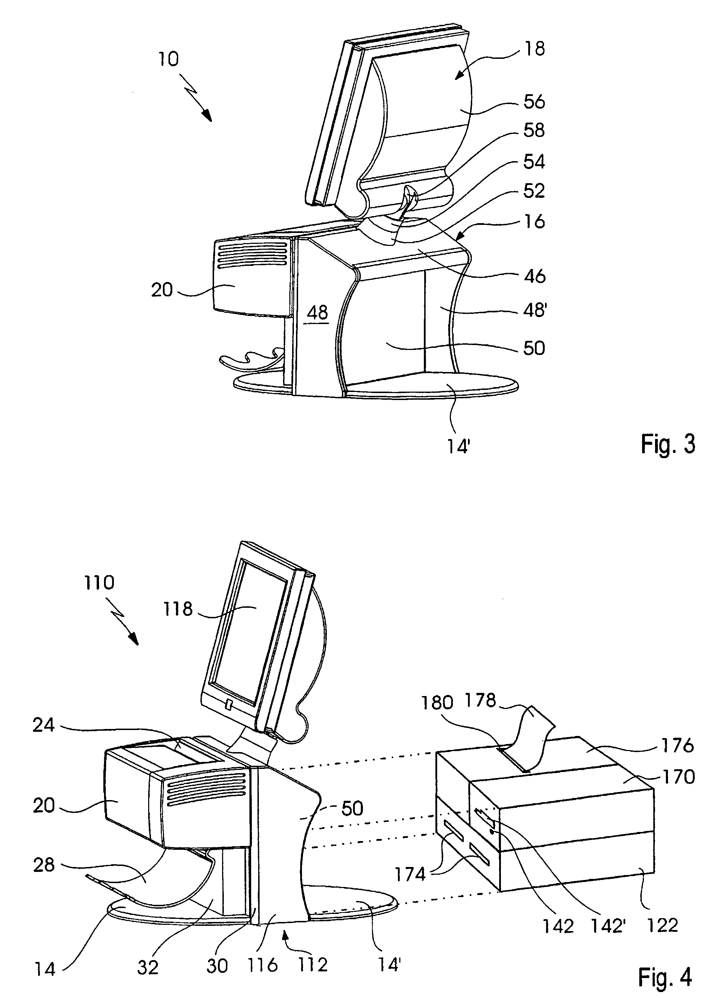

Fig. 3 zeigt das Terminal 10 in perspektivischer Rückansicht. Darin ist zu erkennen, daß der Tragteil 16 rahmenartig mit von dessen Bedienerseite 36 wegweisenden oberen und seitlichen Rahmenteilen 46, 48, 48' ausgebildet ist. Der von den Rahmenteilen 46, 48, 48' und dem hinteren Fußteil 14' begrenzte Aufnahmeraum 50 ist so bemessen, daß er den der Bedienseite 38 nahen Bereich der Elektronikbox 22 und der Platte 15 mit geringem seitlichem Abstand aufzunehmen vermag.

Von dem oberen Rahmenteil 46 steht eine Buchse 52 für die Aufnahme eines unten an dem Sichtgerät 18 angebrachten Schaftes 54 nach oben ab. Der Schaft 54 endet in einem im unteren Bereich des Sichtgeräte-Gehäuses 56 angeordneten Kippgelenk 58, das eine Verstellung des Neigungswinkels des Sichtgerätes 18 gegenüber dem Tragteil 16 gestattet.

Fig. 2 zeigt die Belegleser-Wand 30 in einer von dem Tragteil 12 beabstandeten Position. Zwischen beiden wird dadurch ein Rangierraum 58 frei für eine die Elektronikbox 22 mit dem Sichtgerät 18 verbindende elektrische Leitung 60 und eine die Elektronikbox 22 mit dem Belegleser 20 verbindende zweite elektrische Leitung 62. Letztere ist unter Bildung einer Auszugschlaufe 64 in die Platte 15 eingeführt. Beide Leitungen 60, 62 führen durch die Platte 15 hindurch zu einem Kabel-Anschlußraum 66 der Elektronikbox 22, der von einer lösbaren Abdeckung 68 überdeckt ist.

Zur Installation des Terminals 10 wird die Belegleser-Wand 30 in die in Fig. 2 dargestellte von dem Tragteil 12 beabstandete Position gebracht. Dann werden die Leitungen 60, 62 eingezogen und mit der Elektronikbox 22 und mit dem Sichtgerät 18 bzw. mit dem Belegleser 20 verbunden. Anschließend wird die Einschalttaste 42 betätigt und ein nicht dargestellter Datenträger in das Datenträger-Lesegerät 42' eingelegt. Jetzt oder spätestens nach dem Lesen und der Entnahme des Datenträgers wird die Belegleser-Wand 30 in die Fig. 1 dargestellte, an dem Tragteil 12 anliegende Position gebracht, das Terminal 10 ist betriebsbereit.

Wird nun ein Beleg 26, z.B. ein Wett- oder Lottoschein in die Zuführöffnung 24 eingeführt, so wird dieser von dem Belegleser 20 gelesen und in dem Aufnahmefach 28 abgelegt. Die gelesenen Informationen, im Beispiel die markierten Lottozahlen, werden auf dem Sichtgerät 18 dargestellt.

Irgendwelche Eingaben, z.B. eine Bestätigung, der Abruf eines zu entrichtenden oder auszuzahlenden Betrages werden durch Berühren von auf dem Touch Screen abgebildeten Eingabefeldern getätigt.

Fig. 4 zeigt ein Terminal 110 für die Bearbeitung von Formularen gemäß einem zweiten Ausführungsbeispiel der Erfindung in perspektivischer Seitenansicht. Es umfaßt wie das Terminal 10 gemäß dem ersten Ausführungsbeispiel - weshalb gleiche Teile mit gleichen Bezugszeichen versehen sind- einen Ständer 112 mit einem Fußteil 14, 14' und einem Tragteil 116, ein zweites Sichtgerät 118 mit einer berührungsempfindlichen Eingabefläche, einem sogenannten Touch Screen, einen Belegleser 20 und eine zweite Elektronikbox 122, in der eine Terminal-Steuereinrichtung untergebracht ist. Der Belegleser 20 hat oben eine Zuführöffnung 24 für zu bearbeitende Belege und unten ein Aufnahmefach 28 für Belege, die den Belegleser 20 durchlaufen haben. Der Belegleser 20 ist am oberen Rand einer Belegleser-Wand 30 auf deren Bedienerseite 32 angebracht.

Die zweite Elektronikbox 122 ist besonders flach ausgeführt. Die zweite Elektronikbox 122 ist entsprechend dem aus der WO 9841073 A1 bekannten Gerät mit einem Zusatzgehäuse 170 ausgestattet, in dem eine zweite Einschalttaste 142 und ein zweites Datenträger-Lesegerät 142' untergebracht sind. Das Zusatzgehäuse 170 ist an der zweiten Elektronikbox 122 lösbar und schwenkbar befestigt, und zwar so, daß an der Anschlußseite 172 der zweiten Elektronikbox 122 angeordnete Anschlußstecker 174 für zum Sichtgerät 118 und zum Belegleser 20 führende Kabel in den Aufnahmeraum 50 des Ständers 12 ragen. Damit kann eine hohle Patte für die Kabelführung, welche bei dem Terminal 10 gemäß dem ersten Ausführungsbeispiel mit 15 bezeichnet ist, entfallen. Die zweite Einschalttaste 142 und das zweite Datenträger-Lesegerät 142' sind bei der gewählten Anordnung des Zusatzgehäuses 170 wiederum dem Ausschnitt 40 in dem Tragteil 16 (Fig. 2) zugeordnet.

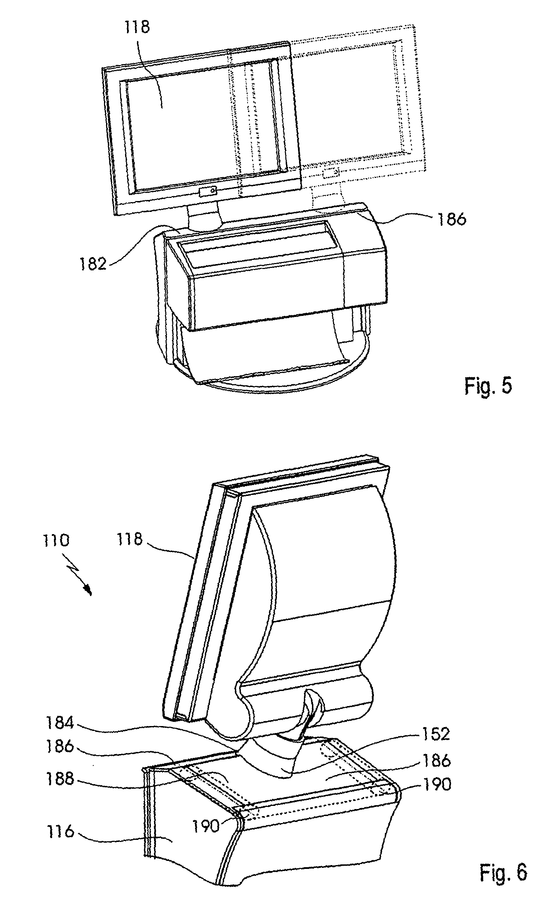

Fig. 4 ist zu entnehmen, daß das Zusatzgehäuse 170 wesentlich schmaler als die zweite Elektronikbox 122 ist. Der verbleibende Platz auf der zweiten Elektronikbox 122 wird von einem Belegdrucker 176 eingenommen, der einen Beleg, z.B. einen Kassenbon 178 durch einen Ausgabeschlitz 180 auszugeben vermag. Letzterer ist auf der Oberseite des Belegdruckers 176 so angeordnet, daß der Kassenbon 178 sowohl von der Bedienseite als auch von einer Kundenseite des Terminals 110 ergriffen werden kann. Um einer Bedienkraft den Zugriff auf den Kassenbon 178 zu ermöglichen, ist das zweite Sichtgerät 118 auf der Oberseite 182 des Tragteils 116 des zweiten Terminals 110 seitenverschieblich (Fig. 5).

Die Aufnahmebuchse 152 trägt dazu einen Haltevorsprung 184, der in einem Führungsschlitz 186 geführt ist. Die Oberseite 182 ist mit einem Ausschnitt 186 versehen, in der die Aufnahmebuchse 152 gleiten kann. Der von der Aufnahmebuchse 152 freigelassene Teil des Ausschnitts 186 ist von einer endlosen Folienbahn abgedeckt, die um zwei parallel zu den Seiten des Ausschnitts 186 angeordnete drehbare Transportrollen 190 herumgeführt ist. Der Ausschnitt 186 ist damit in jeder Stellung des Sichtgerätes 118 staubdicht abgedeckt.

Gemäß einer alternativen Ausgestaltung des Terminals 10 ist das Sichtgerät 18 seitlich schwenkbar auf dem oberen Rahmenteil 46 des Tragteils 16 angeordnet. Dazu ist zwischen die Aufnahmebuchse 52 und den Schaft 54 des Sichtgerätes 18 ein kurbelartig gekröpfter hohler Schwenkarm eingefügt, wobei ein erster Kurbelschenkel in der Aufnahmebuchse 52 und der Schaft 54 des Sichtgerätes 18 in dem anderen Kurbelschenkel drehbar gelagert ist.

## Patentansprüche

1. Terminal (10, 110) für die Bearbeitung von Formularen (26), insbesondere Wettscheinen, umfassend einen Belegleser (20) mit einem Aufnahmefach (28) für Belege, welche den Belegleser (20) durchlaufen haben, ein Sichtgerät (18, 118) mit einer berührungsempfindlichen Eingabefläche und einer eine Terminal-Steuereinrichtung enthaltenden Elektronikbox (22, 122),
- einen Ständer (12, 112) mit einem Fußteil (14, 14') und einem etwa senkrecht von diesem aufragenden Tragteil (16, 116) für die Halterung des Sichtgerätes (18, 118)
**dadurch gekennzeichnet, dass**
- der Belegleser (20) auf einer Bedienerseite des Terminals (10, 110) unterhalb des Sichtgerätes (18, 118) angeordnet und in Richtung einer Bedienperson zwischen einer an dem Tragteil (16, 116) anliegenden und einer von diesem beabstandeten Position verschieblich ist.

2. Terminal (10) nach Anspruch 1, dessen Belegleser (20) an wenigstens einer Auszugschiene befestigt ist, welche an dem Ständer (12) gleitgelagert ist.

3. Terminal (10) nach Anspruch 1, dessen Belegleser (20) an einer Belegleser-Wand (30) befestigt ist, welche die Bedienerseite (36) des Tragteils (16) bei an diesem anliegendem Belegleser (20) im wesentlichen abdeckt und an wenigstens einer Auszugschiene (34) befestigt ist, welche ihrerseits an dem Ständer (12) gleitgelagert ist.

4. Terminal (10) nach Anspruch 2 oder 3 mit einer auf dem rückwärtigen Teil (14') des Fußteils angeordneten, wenigstens teilweise hohlen Platte (15), bei dem die wenigstens eine Auszugschiene (34) bei einer Verschiebung des Beleglesers (20) in Richtung des Tragteils (16) von der Platte (15) aufgenommen wird.

5. Terminal (10, 110) nach einem der vorhergehenden Ansprüche, bei dem die Elektronikbox (22, 122) auf der Platte (15) oder einem -von der Bedienerseite aus gesehen- hinter dem Tragteil liegenden Flächenabschnitt (14') des Fußteils aufgestellt oder befestigt ist.

6. Terminal (10, 110) nach Anspruch 5, dessen Elektronikbox (22, 122) so auf dem Fußteil (14') oder der Platte (15) angeordnet ist, daß ihre Bedienseite (38) an dem Tragteil (16, 116) anliegt, wobei das Tragteil (16) mit wenigstens einem die Bedienelemente (42, 42'; 142, 142') der Elektronikbox (22; 122) freilassenden Ausschnitt (40) versehen ist.

7. Terminal (10, 110) nach Anspruch 6, dessen Tragteil (16) rahmenartig ausgebildet ist, wobei der Rahmen zumindest einen ihrer Bedienseite nahen Bereich der Elektronikbox (22, 122) umgreift.

8. Terminal (10, 110) nach wenigstens einem der vorhergehenden Ansprüche, bei dem eine die Elektronikbox (22) mit dem Belegleser (20) und/oder eine mit dem Sichtgerät (18) verbindende elektrische Leitung (62, 60) unter Bildung einer Auszugschlaufe (64) durch den Tagteil (16) oder auch zusätzlich durch die Platte (15) geführt ist.

9. Terminal (110) nach einem der vorhergehenden Ansprüche, dessen Sichtgerät (118) auf dem Tragteil (116) seitenverschieblich oder seitlich verschwenkbar ist.

## Claims

1. Terminal (10, 110) for processing forms (26), in particular betting slips, comprising a document reader (20) with a receiving compartment (28) for documents which have passed through the document reader (20), a visual display unit (18, 118) with a touch-sensitive input area and an electronic box (22, 122) containing a terminal control device,
- a stand (12, 112) with a foot part (14, 14') and a loadbearing part (16, 116) projecting approximately perpendicularly from the latter to hold the visual display unit (18, 118),
**characterized in that**
- the document reader (20) is arranged on an operator side of the terminal (10, 110) underneath the visual display unit (18, 118) and, in the direction of an operator, can be displaced between a position resting on the loadbearing part (16, 116) and a position at a distance from the latter.

2. Terminal (10) according to Claim 1, whose document reader (20) is fixed to at least one pull-out rail which is mounted such that it can slide on the stand (12).

3. Terminal (10) according to Claim 1, whose document reader (20) is fixed to a document reader wall (30), which substantially covers the operator side (36) of the loadbearing part (16) when the document reader (20) is resting on the latter and is fixed to at least one pull-out rail (34), which in turn is mounted such that it can slide on the stand (12).

4. Terminal (10) according to Claim 2 or 3, having an at least partly hollow plate (15) which is arranged on the rear part (14') of the foot part and in which the at least one pull-out rail (34) is accommodated by the plate (15) when the document reader (20) is displaced in the direction of the loadbearing part (16).

5. Terminal (10, 110) according to one of the preceding claims, in which the electronic box (22, 122) is set up on or fixed to the plate (15) or - as viewed from the operator side - a section (14') of the area of the foot part which is located behind the loadbearing part.

6. Terminal (10, 110) according to Claim 5, whose electronic box (22, 122) is arranged on the foot part (14') or the plate (15) in such a way that its operating side (38) rests on the loadbearing part (16, 116), the loadbearing part (16) being provided with at least one cutout (40) that leaves the operating elements (42, 42'; 142, 142') of the electronic box (22; 122) free.

7. Terminal (10, 110) according to Claim 6, whose loadbearing part (16) is constructed in the manner of a frame, the frame reaching around at least one region of the electronic box (22, 122) that is close to its operating side.

8. Terminal (10, 110) according to at least one of the preceding claims, in which an electric line (62, 60) connecting the electronic box (22) to the document reader (20) and/or an electric line (62, 60) connecting to the visual display unit (18) is led through the loadbearing part (16) or else additionally through the plate (15), forming a pull-out loop (64).

9. Terminal (110) according to one of the preceding claims whose visual display unit (118) can be displaced laterally or pivoted laterally on the loadbearing part (116).

## Revendications

1. Terminal (10, 110) pour traiter des formulaires (26), en particulier des cartes de pari, lequel comprend un lecteur de documents (20) ayant un réceptacle (28) pour des documents qui ont traversé le lecteur de documents (20), une unité de visualisation (18, 118) ayant une surface de saisie sensible au contact et un coffret électronique (22, 122) qui contient une installation de commande pour terminal, un support (12, 112) ayant une partie de base (14, 14') et une partie porteuse (16, 116) qui en dépasse à peu près perpendiculairement pour maintenir l'unité de visualisation (18, 118),
**caractérisé en ce que** le lecteur de documents (20) est disposé sur un côté service du terminal (10, 110) au-dessous de l'unité de visualisation (18, 118) et est mobile en direction d'une personne de service entre une position appliquée à la partie porteuse (16, 116) et une position à distance de celle-ci.

2. Terminal (10) selon la revendication 1 dont le lecteur de documents (20) est fixé à au moins un rail de rallonge qui est monté sur le support (12) par un palier lisse.

3. Terminal (10) selon la revendication 1 dont le lecteur de documents (20) est fixé à une paroi de lecteur de documents (30) qui recouvre pratiquement le côté service (36) de la partie porteuse (16) lorsque le lecteur de documents (20) s'y applique et qui est fixé à au moins un rail de rallonge (34) lequel est monté quant à lui sur le support (12) par un palier lisse.

4. Terminal (10) selon la revendication 2 ou 3 avec une plaque (15) au moins partiellement creuse et disposée sur la partie arrière (14') de la partie de base, pour lequel le rail de rallonge (34) au moins au nombre d'un est reçu par la plaque (15) lorsque le lecteur de documents (20) est déplacé en direction de la partie porteuse (16).

5. Terminal (10, 110) selon l'une des revendications précédentes pour lequel le coffret électronique (22, 122) est fixé sur la plaque (15) ou sur une portion de surface (14') qui se trouve derrière la partie porteuse - lorsqu'on la voit du côté service.

6. Terminal (10, 110) selon la revendication 5 dont le coffret électronique (22, 122) est disposé sur la partie de base (14') ou sur la plaque (15) de sorte que son côté service (38) s'applique à la partie porteuse (16, 116), la partie porteuse (16) étant munie d'au moins une portion (40) qui laisse libre les éléments de manoeuvre (42, 42' ; 142, 142') du coffret électronique (22, 122).

7. Terminal (10, 110) selon la revendication 6 dont la partie porteuse (16) est conçue sous forme de cadre, le cadre entourant au moins une zone - proche de son côté service - du coffret électronique (22; 122).

8. Terminal (10, 110) selon au moins une des revendications précédentes pour lequel un câble électrique (62, 60) qui relie le coffret électronique (22) au lecteur de documents (20) et/ou à l'unité de visualisation (18) est guidé à travers la partie porteuse (16) ou même plus loin à travers la plaque (15) en formant une boucle de rallonge (64).

9. Terminal (110) selon l'une des revendications précédentes dont l'unité de visualisation (118) peut être déplacée latéralement ou basculée latéralement sur la partie porteuse (116).
